# EUROPEAN PATENT SPECIFICATION

(11) **EP 1 661 752 B1**
(45) Date of publication and mention of the grant of the patent: **11.08.2010**
(21) Application number: 05077654.1
(22) Date of filing: 22.11.2005
(51) Int. Cl.: B60N 2/06, B60N 2/08

(54) **Vehicle seat device**
Fahrzeugsitzvorrichtung
Dispositif de siège de véhicule

(30) Priority: 24.11.2004 JP 2004338825
(43) Date of publication of application: 31.05.2006
(73) Proprietor: AISIN SEIKI KABUSHIKI KAISHA, Kariya-shi, Aichi-ken 448-8650 (JP)
(72) Inventor: Kojima, Yasuhiro, Kariya-shi Aichi-ken 448-8650 (JP); Mizuno, Ryousuke, Kariya-shi Aichi-ken 448-8650 (JP)
(74) Representative: Marshall, John Grahame

(56) References cited:
- JP-A- 3 224 835
- JP-A- 11 286 230

## Description

### FIELD OF THE INVENTION

The present invention relates to a vehicle seat device.

### BACKGROUND

A known vehicle seat device disclosed in, for example, JP11-286230A, includes a lower rail fixed to a vehicle floor and an upper rail fixed to a vehicle seat so as to be slidable relative to the lower rail. Specifically, plural lock holes are formed on the lower rail in a longitudinal direction thereof, and a lock member having a lock pawl, which can be inserted into and detached from one of the lock holes, is rotatably attached to the lower rail.

In this circumstance, for example, when the lock pawl is inserted into the lock hole form outside of the rail in its width direction, in accordance with a rotation of the lock member, the upper rail is limited so as not to slide relative to the lower rail.

Because depth of the insertion of the lock pawl into the lock hole and a hole varies, a top end of the lock pawl sometimes interferences with the lower rail, specifically a wall portion (bending wall portion) of the lower rail, the wall portion being bent inward in a width direction of the lower rail.

JP03-224835A discloses the features of the pre-characterizing portion of claim 1 but still suffers from the disadvantage discussed above.

A need thus exists to provide a vehicle seat device, in which a lock pawl of a lock member provided to the second rail is inserted into a lock hole formed on the first rail in order to limit a second rail so as not to slide relative to a first rail, at the same time, a chance can be reduced that a top end of the lock pawl interferences with the lower rail, specifically a wall portion (bending wall portion) of the lower rail, the wall portion being bent inward in a width direction of the lower rail.

### SUMMARY OF THE INVENTION

According to an aspect of the present invention, a vehicle seat device includes a first rail (3) adapted to be fixed to one of a vehicle floor (F) and a seat cushion (C) so as to extend in a vehicle front-rear direction, and having a base portion (12), at which the first rail is adapted to be fixed to one of the vehicle floor and the seat cushion, and a side wall portion (11) extending almost vertically from the base portion (12) and bending so as to form a first bending portion (13), the side wall portion (11) including, along a longitudinal direction thereof, an unlocking range and a locking range, the locking range including plural lock holes (11a) arranged in a longitudinal direction of the side wall portion (11), a second rail (4) adapted to be fixed to the other of the vehicle floor and the seat cushion, arranged so as to engage with and slide relative to the first rail (3), the second rail (4) having a second bending portion (22) extending into the space between the side wall portion (11) and the first bending portion (13) of the first rail (3), and a lock member (25) rotatably provided to the second rail (4) and having a lock pawl (25a), the lock member (25) allowing and prohibiting the second rail (4) to slide relative to the first rail (3) when the lock pawl (25a) is respectively engaged with and detached from each of the lock holes (11a) ; **characterized in that** the first bending portion (13) having a distal end portion (13a) which extends vertically downwardly towards the base portion (12) in the vehicle front-read direction over both the locking and unlocking ranges, the distal end portion (13a) having, over an entire range corresponding to the locking range, a first vertical length (L1) which is shorter than its second vertical length (L2) over a range corresponding to the unlocking range.

### BRIEF DESCRIPTION OF THE DRAWINGS

The foregoing and additional features and characteristics of the present invention will become more apparent from the following detailed description considered with reference to the accompanying drawings, wherein:
Fig.1 illustrates a schematic front view indicating a vehicle seat device;
Fig.2 illustrates a side view indicating an embodiment of the present invention;
Fig.3 illustrates a cross section along a III-III line in Fig.2; and
Fig.4 illustrates a pattern diagram indicating the lower rail.

### DETAILED DESCRIPTION

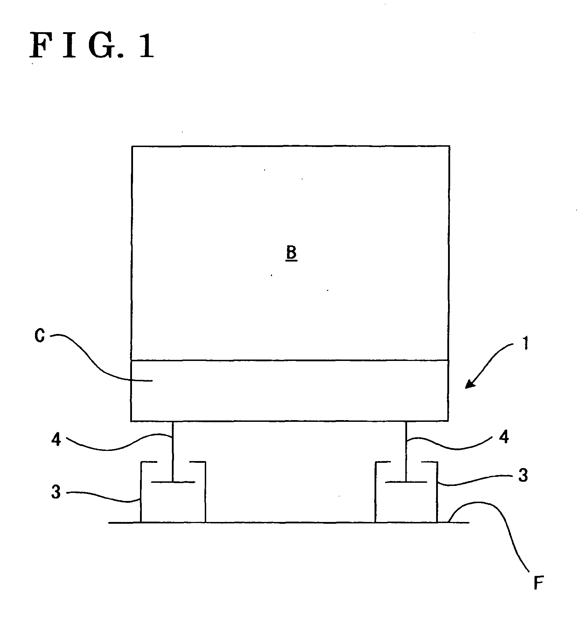

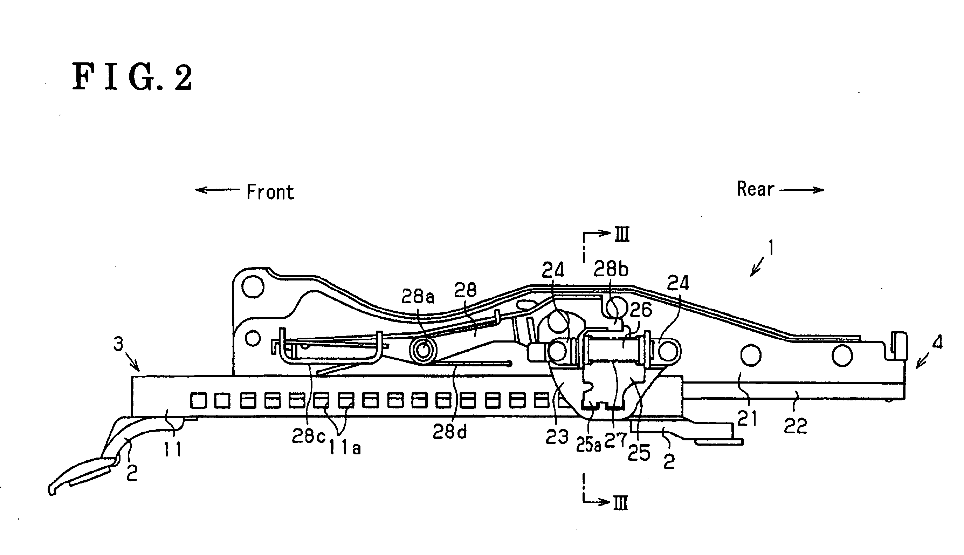

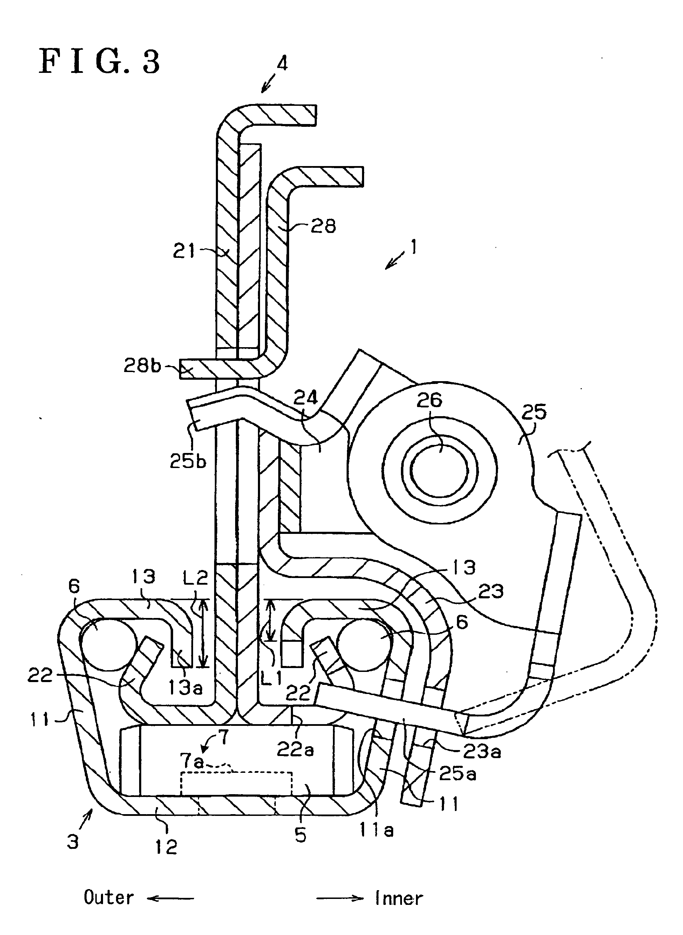

An embodiment to implement the present invention will be explained in accordance with drawings attached hereto. Fig.1 illustrates a schematic front view indicating a vehicle seat device. Fig.2 illustrates a side view indicating a backbone portion of the seat body 1, which is mounted to a front seat of a vehicle, such as an automobile. Fig.3 illustrates a cross section of the backbone portion along III-III line in Fig.2. Specifically, the backbone portion of the seat body 1 illustrated in Fig.2 is mounted to a right portion of the front seat, and another backbone portion is also mounted to a left portion of the front seat. In other words, a pair of backbone portions is provided in a width direction of the seat body 1 (in an orthogonal direction relative to the drawing paper). Because each of the backbone portions provided at the right front and the left front has a similar configuration, an explanation of the left backbone portion will be skipped here, and only the configuration of the right backbone portion will be explained below.

As shown in Fig. 1, the seat body 1 includes a pair of lower rails 3 and a pair of upper rails 4 sliding relative to the pair of lower rails 3. As is commonly known, a seat cushion C connected with a seat back B is fixed to the upper rails 4 so as to be slidable relative to the lower rail 3. The pair of lower rails 3 is fixed to a vehicle floor F by means of a pair of bracket 2. The pair of lower rails 3 serving as a first rail extends in a front-back direction of the vehicle. As shown in Fig.2, the lower rail 3 serving as the first rail is fixed to the vehicle floor (not shown) by means of a pair of brackets 2 and extends in a front-back direction of the vehicle. As shown in Fig.3, the lower rail 3 is formed in a U-shape in its cross section, having a pair of side wall portions 11 and a base portion 12. Specifically, each of the wall portions 11 extends from each side in a width direction of the base portion 12, and the base portion 12 is positioned so as to connect the side wall portions 11.

Then, a first bending portion 13 is formed at a top end of each of the side wall portions 11. Specifically, the first bending portion 13 is formed continuously in a longitudinal direction of the side wall portion 11, and in a cross section of the seat body 1, the first bending portion 13 extends inward in a width direction thereof and further extends toward a base of each of the side wall portions 11.

Thus, a top end portion 13a, serving as a distal end portion of each of the first bending portion 13, protrudes in an approximate vertical direction, and one top end portion 13a is spaced at a predetermined distance from the other top end portion 13a in a width direction of the lower rail 3.

The upper rail 4 fixed to a frame (not shown) of the seat cushion S is fixed so as to serve as a second rail extends in a front-back direction of the vehicle. As shown in Fig.3, the upper rail 4 is formed in a reversed T-shape in a cross section and includes a pair of supporting wall portions 21 and a second bending portion 22. Specifically, each of the supporting wall portions 21 extend in an approximately vertical direction so as to penetrate between each of the first bending wall portions 13 (top end portion 13a). The second bending portion 22 is formed continuously from a top end (lower end) of the supporting wall portion 21 so as to extend outward in a width direction thereof, and further extends upward so as to be enclosed by the first ending wall portion 13.

The upper rail 4 is supported by means of plural rollers 5, formed in a column shape and provided between the upper rail 4 and the base portion 12 of the lower rail 3. Further, the second bending portion of the upper rail 4 is engaged with the first bending portion 13 by means of a boll 6 at the top end of the second bending portion 22. Thus, the upper rail 4 is supported slidably in a longitudinal direction (in a front-back direction of the vehicle) relative to the lower rail 3 in a manner where the roller 5 is rotated between the upper rail 4 and the lower rail 3. Because the first bending portion 13 is engaged with the second bending portion 22, it can be prevented that the upper rail 4 is moved in a vertical direction so as to be removed from the lower rail 3.

As shown in Fig.3, at each of a front end portion and a rear end portion of the lower rail 3 (base portion 12), screwing members 7 are provided in order to screw each of the brackets 2 to the lower rail 3. Further, each of the screwing members 7 includes a stopper 7a protruding in a vertical direction. Because each of the stoppers 7a is provided at the front end portion and the rear end portion of the lower rail 3, a maximum range, in which the upper rail 4 can slide relative to the lower rail 3, is regulated in a manner where the roller 5 engages with each of the stoppers 7a. Thus, the seat fixed to the upper rail 4 can slide relative to the vehicle floor, to which the lower rail 3 is fixed, in a longitudinal direction within a range, which is regulated by means of the engagement between the roller 5 and the stopper 7a.

Further, on the side wall portion 11, which is positioned at the inner side; in a seat width direction, of the lower rail 3; plural lock holes 11a are formed so as to be spaced with a predetermined distance in a longitudinal direction of the side wall portion 11. The lock holes 11 a are formed in a longitudinal direction within a range, which is set on the basis of the maximum range in which the upper rail 4 can slide. Further, on the second bending portion 22, which is positioned at the inner side, in a seat width direction, of the upper rail 4; plural holes 22a, for example two holes 22a, are formed so as to be match with the lock holes 11a. Further, an auxiliary plate 23 is fixed to an inner surface of the supporting wall portion 21, which is positioned at the inner side, in a seat width direction, of the upper rail 4; and plural through holes 23a are formed so as to match with plural lock holes 11a, for example two lock holes 11a.

Further, each of the brackets 24 is fixed to the upper rail 4 (second bending portion 22) together with the auxiliary plate 23. To each of the brackets 24, a lock plate 25 serving as a lock member is rotatably supported by means a pin 26. Further, plural lock pawls 25a (for example two lock pawls 25a), which can be inserted into and detached from the through holes 22a in accordance with the rotation of the lock plate 25, are formed on the lock plate 25. Specifically, the lock pawls 25a are provided, so as to be inserted into the through holes 23a and then inserted into the holes 22a, and so as to be detached from the holes 22a, and then detached from the through hole 23a sequentially. In accordance with the rotation of the lock pawls 25a inserted into and detached from the through hole 23a and the hole 22a, the lock pawls 25a can also be inserted into and detached from the plural lock holes 11a which are adjacent together (for example two lock holes 11a).

Within the range in which the upper rail 4 can slide relative to the lower rail 3, when the seat is moved and positioned to the most front end of the range, the lock pawls 25a are inserted into and detached from the lock holes 11a, which includes a lock hole 11a provided at the very front end of the series of the lock holes 11a. On the other hand, when the seat is moved and positioned to the most rear end of the range, the lock pawls 25a are inserted into and detached from the lock holes 11a, which includes a lock hole 11 provided at the very rear end of the series of the lock holes 11a. Further, when the seat is positioned between the most front end and the most rear end of the range, the lock pawls 25a are inserted into and detached from the lock holes 11 a, which are positioned between the front end and the rear end of the range.

In this circumstance, when the lock plate 25 is rotated in one direction (in a clockwise direction in Fig.3), and the lock pawls 25a are moved toward the first bending portion 13 (top end portion 13a) so as to be inserted into the lock holes 11a, the through holes 23a and the holes 22a, the upper rail 4 is regulated so as not to slide relative to the lower rail 3. At this point, the lock hole 11a is held by means of the lock pawls 25a, which are inserted thereinto, between the through holes 23a and the holes 22a, into which the lock pawls 25a are also inserted. Thus, the upper rail 4 is maintained at a required position within the range, in which the upper rail 4 can slide relative to the lower rail 3, and further, the position of the seat that is supported by the upper rail 4 can also be regulated. Further, the lock plate 25 is continuously biased by means of the spring 27 shown in Fig.1, which is provided around the pin 26, so as to be rotated in a direction where the lock pawls 25a are inserted into the lock holes 11a (in a clockwise direction).

A contacting flange 25b is formed on the lock plate 25 so as to face to the lock pawls 25a relative to the pin 26. As shown in Fig.2, to the supporting wall portion 21 of the upper rail 4 at inner side in a seat width direction, an operation lever 28 is rotatably supported by means of a pin 28a at approximately central portion in a longitudinal direction of the upper rail 4. The operation lever 28 includes a contacting flange 28b at rear end portion in a longitudinal direction thereof. The contacting flange 28b is positioned so as to contact with the contacting flange 25b at a bottom surface of the contacting flange 28b. Further, the operation lever 28 includes a maintaining portion 28c to which an operation handle (not shown) can be fit so as to be maintained. The operation lever 28 is continuously biased by means of a spring 28d, which is provided around the pin 28a so as to be rotated in a direction
where the contacting flange 28b moves away from the contacting flange 25b (in an anticlockwise direction in Fig.2).

In this configuration, when the upper rail 4 is regulated so as not to slide relative to the lower rail 3 by means of the lock pawls 25a of the lock plate 25 engaging with the lock holes 11a of the lower rail 3, the seat that is fixed to the upper rail 4 can be maintained relative to the vehicle floor at a predetermined position. Further, when the operation lever 28 is rotated against the biasing force, which is applied to the operating lever 28 by the spring 28d by operating the operation handle, the contacting flange 25b engages with the contacting flange 28b, and then the lock plate 25 is rotated against the biasing force from the spring 27 in an anticlockwise direction, and finally the lock pawls 25a can be disengaged from the lock holes 11a. Thus, the upper rail 4 becomes slidable relative to the lower rail 3; in other words, the seat fixed to the upper rail 4 becomes slidable relative to the vehicle floor in a front-back direction of the vehicle. Thus, the position of the seat can be adjusted relative to the vehicle floor in a front-back direction of the vehicle.

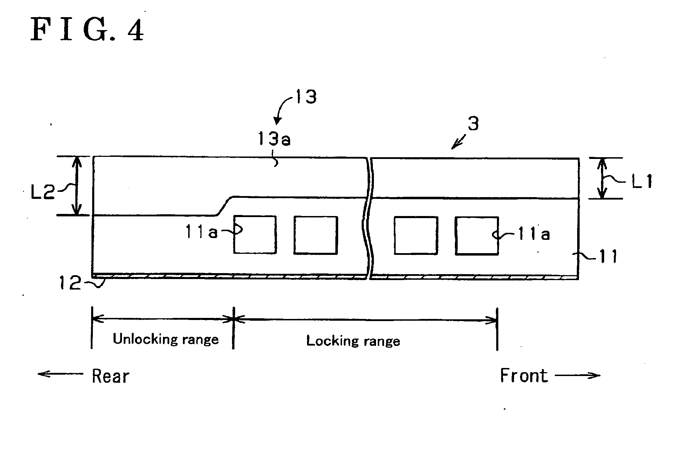

In this embodiment, a stopper (not shown) is provided at the lower rail 3 in order to set a slidable range (hereinbelow referred to as a locking range) and an unslidable range (hereinbelow referred to as a unlocking range) of the upper rail 4. Specifically, as schematically shown in Fig.4, on the side wall portion 11 of the lower rail 3, the side wall portion 11 including the lock holes 11a and provided inner side in a seat width direction, the locking range and the unlocking range is set relative to the lock hole 11a provided at the very rear end of the series of the lock holes 11a. Specifically, the locking range is set at the front relative to the lock hole 11a provided at the very rear end of the series of the lock holes 11a, and the unlocking range is set at the rear relative to the lock hole 11 provided at the very rear end of the series of the lock holes 11a. The locking range may be set from the lock hole 11a provided at the very rear end of the series of the lock holes 11a, to the lock hole 11a provided at the very front end of the series of the lock holes 11a. Specifically, the locking range is set to within a whole range where the lock pawls 25a can be inserted into the lock holes 11a formed on the side wall portion 11, which is provided at the inner side in a seat width direction.

Further, on the side wall portion 11, which is provided outer side in a seat width direction and not having the lock holes 11a, the unlocking range is set within a whole longitudinal length thereof in a longitudinal direction (not shown).

Furthermore, assuming that a vertical length of the top end portion 13a within a range corresponding to the locking range is a vertical length L1 serving as a first vertical length L1 and a length in a vertical length of the top end portion 13a within a range corresponding to the unlocking range is a vertical length L2 serving as a second vertical length L2; the vertical length L1 is set to be shorter than the vertical length L2. Such difference in the vertical length is provided in order to regulate the upper rail 4 so as not to slide relative to the lower rail 3, when the lock pawls 25a is moved toward the first bending portion 13 (top end portion 13a) so as to be inserted into the lock hole 11a after inserted into the through holes 23a, and then inserted into the holes 22a; chances that the lock pawls 25a engage with the top end portion 13a can be reduced even when the level of the insertion of the lock pawls 25a vary.

According to the embodiment, the vertical length L1 of the first bending portion 13 within a range corresponding to the locking range is set to be shorter than the vertical length L2 of the first bending portion within a range corresponding to the unlocking range. Thus, in order to regulate the upper rail 4 so as not to slide relative to the lower rail 3, when the lock pawls 25a is moved toward the first bending portion 13 (top end portion 13a) so as to be inserted into the lock hole 11a; chances that the lock pawls 25a engage with the top end portion 13a can be reduced even when the level of the insertion of the lock pawls 25a vary. Further, level of the noise that occurs when the lock pawls 25a engages with the first bending portion 13 can be reduced.

Furthermore, because the vertical length L2 of the first bending portion 13 within a range corresponding to the unlocking range is set to be longer than the vertical length L1 of the first bending portion 13 within a range corresponding to the locking range, the upper rail 4 can be maintained within the lower rail 3, in other words, between the top end portions 13a and the side walls 11, even when a load applied to the upper rail 4 in a vertical direction.

According to the embodiment, the unlocking range is formed at the rear end portion of the side wall portion 11, and the vertical length L2 within a range corresponding to the unlocking range of the first bending portion 13 is set to be longer than the vertical length L1 within a range corresponding to the locking range. Generally, when the seat, which can be moved in a front-back direction in accordance with the slide of the upper rail 4 relative to the lower rail 3, is positioned at the rear end, the upper rail 4 and the lower rail 3 overlap each other within a relatively short range. At this point, because the unlocking range is positioned at the end portion (most rear portion) of the lower rail 3, which overlaps the upper rail 4, and the vertical length L2 of the first bending portion 13 within a range corresponding to the unlocking range is set to be longer than the vertical length L1 of the first bending portion 13 within a range corresponding to the locking range; the upper rail 4 can be maintained within the lower rail 3, in other words, between the top end portions 13a and the side walls 11, even when a load applied to the upper rail 4 in a vertical direction. The most rear portion is defined as an end portion of the first rail that overlaps the second rail in a longitudinal direction thereof when the seat is moved to the rear position. The most rear portion may not be identical to the actual very rear end portion of the first rail itself.

According to the present embodiment, the unlocking range is also set to the side wall portion 11, which is provided at the outer side and not having the lock holes 11a. Thus, because the vertical length L2 of the first bending portion 13, which continues to the side wall portions 11, which is provided at the outer side and not having the lock holes 11a, is set to be relatively long within a whole longitudinal length, the upper rail 4 can be maintained within the lower rail 3, in other words, between the top end portions 13a and the side walls 11, even when a load applied to the upper rail 4 in a vertical direction.

In the embodiment, the unlocking range is also set to the side wall portion 11 that is provided at the outer side, in a seat width direction, of the lower rail 3. Generally, an attachment portion of a seat belt, which is used for supporting a passenger to the seat, is provided to the vehicle seat at the outer side in a seat width direction. In such configuration, in case of an impact, a load is applied from the seat belt to the seat in an oblique direction from the upper and outer side of the seat toward the lower and inner side of the seat. At this point, moments are generated at the lower rail 3 that supports the seat. A level of the moment generated at the outer side, in a seat width direction, of the lower rail 3 becomes larger than the moment generated at the inner side, in a seat width direction, of the lower rail 3. On the other hand, because the vertical length L2 of the first bending portion 13, which continues to the side wall portion 11 provided at the outer side, in a seat width direction, of the lower rail 3, is set to be relatively long, the upper rail 4 can be maintained within the lower rail 3 with enduring the above mentioned moments whose level is relatively high.

The embodiment may be altered as follows. In the embodiment, the lower rail 3 may be used as the upper rail 4, or the upper rail 4 may be used as the lower rails. Specifically, the upper rail 4 may be fixed to the vehicle floor, and the lower rail 3 may be fixed to the seat. In this configuration, when the seat is moved in the rear direction and positioned at the rear of the upper rail 4, the front end portion of the lower rail 3 that overlaps the upper rail 4 in a longitudinal direction, is positioned at the front of the vehicle. Thus, the unlocking range of the lower rail 3 may be positioned at least at the most front portion of the lower rail 3.

In the embodiment, in the light of a manufacturing process and a parts management, for example in order to simplify the process or manufacture the lower rail 3 so as to be symmetrical, range whose vertical length is short may also be provided within a range corresponding to the unlocking range. This range is not the unlocking range. In other words, the unlocking range is defined on the basis of the locking range corresponding to the lock holes 11 a, and also defined on the basis of the vertical length of the first bending portion 13. The lower rail 3 may include a normal range that is not categorized in neither the locking range nor the unlocking range.

In this embodiment, the locking range and the unlocking range are set relative to the lock hole 11a provided at the very front end of the series of the lock holes 11a. Specifically, the locking range is set at the rear relative to the lock hole 11a provided at the very front end of the series of the lock holes 11a, and the unlocking range is set at the front relative to the lock hole 11 that is provided at the very front end of the series of the lock holes 11a. A hole that is similar to the lock hole 11a, to which he lock pawl 25a is not inserted, may be formed on the side wall portion 11 within a range corresponding to the unlocking range.

In this embodiment, the unlocking range may be provided at a central portion in a longitudinal direction of the locking range; in other words, the unlocking range may be provided so as to be sandwiched between the locking ranges. In this embodiment, the lock holes 11a, which relates to the setting of the locking range and the unlocking range, also relates to the insertion of the lock pawls 25a thereinto (regulating the slide of the upper rail 4 relative to the lower rail 3). Even if another holes that are similar to the lock holes 11a exist on the vehicle seat device, it does not exceed the configuration of the present invention.

In this embodiment, the numbers of the lock pawls 25a and the lock holes 11a may be changed; however, at least one lock pawl 25a and at least one lock hole 11a need to be provided. In this embodiment, the holes 22a may not be provided if the second bending portion 22 of the upper rail 4 is positioned on a track of the movement of the lock pawls 25a so as to be inserted into the lock holes 11a. Further the auxiliary plate 23 may not be provided.

In this embodiment, the seat is moved in a front-back direction; however, the seat can be moved in a vehicle width direction in accordance with the slide of the lower rail relative to the upper rail.

According to the vehicle seat device, the unlocking range is set at the first rail that is positioned at the outer side, in a seat width direction. In the embodiment, the unlocking range is also set to the side wall portion 11 that is provided at the outer side, in a seat width direction, of the first rail. Generally, an attachment portion of a seat belt, which is used for supporting a passenger to the seat, is provided to the vehicle seat at the outer side in a seat width direction. In such configuration, in case of an impact, a load is applied from the seat belt to the seat in an oblique direction from the upper and outer side of the seat toward the lower and inner side of the seat. At this point, moments are generated at the first rail that supports the seat. A level of the moment generated at the outer side, in a seat width direction, of the first rail becomes larger than the moment generated at the inner side, in a seat width direction, of the first rail. On the other hand, because the vertical length L2 of the first bending portion 13, which continues to the side wall portion 11 provided at the outer side, in a seat width direction, of the first rail, is set to be relatively long, the second rail can be maintained within the first rail with enduring the above mentioned moments whose level is relatively high.

According to the embodiment, a vehicle seat device comprises a first rail fixed to at least one of a vehicle floor and a seat and having side wall portions and first bending portions, the side wall portions, in their cross sections, extending at respective side portions in a width direction of the first rail, the first bending portions, in their cross sections, extending from each top of the side wall portions, in an inner and a width direction of the first rail, and further extending in an approximately vertical direction toward each bottom portion of the side wall portions so as to form distal ends, a second rail fixed to at least the other of the vehicle floor and the seat and having second bending portions, the second bending portions, in their cross sections, extending in an outer and a width direction of the second rail, and further extending in an approximately vertical direction so as to embrace the side wall portion and the first bending portion, plural lock holes formed on one of the first wall portions in a longitudinal direction thereof, a lock member rotatably provided to the second rail and having a lock pawl, which is inserted into and detached from at least one of the lock holes, the first rail is regulated so as not to slide relative to the second rail by means of the lock pawl moved toward the first bending portion so as to be inserted into the lock hole, the second rail is regulated so as not to slide relative to the first rail by means of the lock pawl moved toward the first bending portion so as to be inserted into the lock hole, the first rail includes a locking range and a unlocking range; and a first vertical length of the distal end, which extends in an approximately vertical direction toward the bottom portion of the side wall portion within a range corresponding to the locking range, is set to be shorter than a second vertical length of the distal end, which extends in an approximately vertical direction toward the bottom portion of the side wall portion within a range corresponding to the unlocking range. In this configuration, because the vertical length L2 within a range corresponding to the unlocking range is set to be longer than the vertical length L1 within a range corresponding to the locking range, the second rail can be maintained within the first rail, or the first rail can be maintained within the second rail, even when a load applied to the upper rail 4 in a vertical direction.

## Claims

1. A vehicle seat device comprising:
a first rail (3) adapted to be fixed to one of a vehicle floor (F) and a seat cushion (C) so as to extend in a vehicle front-rear direction, and having a base portion (12), at which the first rail (3) is adapted to be fixed to one of the vehicle floor and the seat cushion, and a side wall portion (11) extending almost vertically from the base portion (12) and bending so as to form a first bending portion (13);
the side wall portion (11) including, along a longitudinal direction thereof, an unlocking range and a locking range, the locking range including plural lock holes (11a) arranged in a longitudinal direction of the side wall portion (11);
a second rail (4) adapted to be fixed to the other of the vehicle floor and the seat cushion, arranged so as to engage with and slide relative to the first rail (3);
the second rail (4) having a second bending portion (22) extending into the space between the side wall portion (11) and the first bending portion (13) of the first rail (3); and
a lock member (25) rotatably provided to the second rail (4) and having a lock pawl (25a), the lock member (25) selectively allowing or prohibiting the second rail (4) to slide relative to the first rail (3) when the lock pawl (25a) is respectively engaged with or detached from selected one of the lock holes (11a);
**characterized in that** the first bending portion (13) terminates in a distal end portion (13a) which extends generally vertically downwardly towards the base portion (12) in the vehicle front-rear direction over both the locking and unlocking ranges, the distal end portion (13a) having, over an entire range corresponding to the locking range, a first vertical length (L1) which is shorter than its second vertical length (L2) over a range corresponding to the unlocking range.

2. The vehicle seat device according to Claim 1, wherein the unlocking range is set at least at a rearmost portion of the first rail (3).

3. The vehicle seat device according to Claim 1 or claim 2, wherein the unlocking range is set at the side wall portion (11) on which the lock holes (11a) are not formed.

4. The vehicle seat device according to any preceding Claim, wherein, at the end portion of the unlocking range where the distal end portion (13a) approaches the locking range, the second vertical length of the distal end portion (13a) is gradually reduced in the rear direction.

## Patentansprüche

1. Fahrzeugsitzvorrichtung mit:
einer ersten Schiene (3), die angepasst ist, um an einem von einem Fahrzeugboden (F) und einem Sitzkissen (C) befestigt zu sein, um sich in einer Vorwärts-Rückwärts-Richtung des Fahrzeugs zu erstrecken, und die einen Bodenabschnitt (12), an den die erste Schiene (3) angepasst ist, um an einem von dem Fahrzeugboden und dem Sitzkissen befestigt zu sein, und einem Seitenwandabschnitt (11) aufweist, der sich beinahe vertikal von dem Bodenabschnitt (12) aus erstreckt und sich biegt, um einen ersten Biegeabschnitt (13) auszubilden;
wobei der Seitenwandabschnitt (11) entlang dessen Längsrichtung einen Entriegelungsbereich und einen Verriegelungsbereich aufweist, wobei der Verriegelungsbereich mehrere Verriegelungslöcher (11a) aufweist, die in einer Längsrichtung des Seitenwandabschnitts (11) angeordnet sind;
einer zweiten Schiene (4), die angepasst ist, um an dem anderen von dem Fahrzeugboden und dem Sitzkissen befestigt zu sein, und die angeordnet ist, um mit der ersten Schiene (3) in Eingriff zu gehen und relativ zu dieser zu gleiten;
wobei die zweite Schiene (4) einen zweiten Biegeabschnitt (22) aufweist, der sich in den Raum zwischen dem Seitenwandabschnitt (11) und dem ersten Biegebereich (13) der ersten Schiene (3) erstreckt; und
einem Verriegelungsbauteil (25), das an der zweiten Schiene (4) drehbar vorgesehen ist und einen Verriegelungshebel (25a) aufweist;
wobei das Verriegelungsbauteil (25) es wahlweise ermöglicht oder verhindert, dass die zweite Schiene (4) relativ zu der ersten Schiene (3) gleitet, wenn der Verriegelungshebel (25a) mit dem ausgewählten Loch der Verriegelungslöcher (11a) in Eingriff ist bzw. von diesem gelöst ist;
**gekennzeichnet dadurch, dass** der erste Biegeabschnitt (13) in einem distalen Endabschnitt (13a) endet, der sich generell vertikal abwärts in Richtung zu dem Bodenabschnitt (12) hin in der Fahrzeug-Längsrichtung über sowohl den Verriegelungsbereich als auch den Entriegelungsbereich hinweg erstreckt, wobei der distale Endabschnitt (13a) über einen gesamten Bereich, der dem Verriegelungsbereich entspricht, eine erste vertikale Länge (L1) aufweist, die kürzer als dessen zweite vertikale Länge (L2) über einen Bereich hinweg ist, der dem Entriegelungsbereich entspricht.

2. Fahrzeugsitzvorrichtung nach Anspruch 1, wobei der Entriegelungsbereich wenigstens an einem hintersten Abschnitt der ersten Schiene (3) festgesetzt ist.

3. Fahrzeugsitzvorrichtung nach Anspruch 1 oder Anspruch 2, wobei der Entriegelungsbereich an dem Seitenwandabschnitt (11) festgesetzt ist, an dem die Verriegelungslöcher (11a) nicht ausgebildet sind.

4. Fahrzeugsitzvorrichtung nach einem der vorangehenden Ansprüche, wobei sich die zweite vertikale Länge des distalen Endabschnitts (13a) an dem Endabschnitt des Entriegelungsbereichs, an dem der distale Endabschnitt (13a) den Verriegelungsbereich erreicht, in der Rückwärtsrichtung allmählich verringert.

## Revendications

1. Dispositif de siège de véhicule comprenant:
un premier rail (3) adapté pour être fixé à l'un d'un plancher (F) du véhicule et d'un coussin (C) de siège de manière à s'étendre dans une direction avant-arrière du véhicule, et ayant une partie de base (12), au niveau de laquelle le premier rail (3) est adapté pour être fixé à l'un du plancher du véhicule et du coussin de siège, et une partie (11) de paroi latérale s'étendant presque verticalement de la partie de base (12) et fléchissant de manière à former une première partie de flexion (13);
la partie (11) de paroi latérale comportant, le long d'une direction longitudinale de celle-ci, une plage de déverrouillage et une plage de verrouillage, la plage de verrouillage comportant plusieurs trous de verrouillage (11a) agencés dans une direction longitudinale de la partie (11) de paroi latérale;
un deuxième rail (4) adapté pour être fixé à l'autre parmi le plancher du véhicule et le coussin de siège, agencé de sorte à s'engager avec et à glisser par rapport au premier rail (3);
le deuxième rail (4) ayant une deuxième partie de flexion (22) s'étendant dans l'espace entre la partie (11) de paroi latérale et la première partie de flexion (13) du premier rail (3); et
un élément de verrouillage (25) pourvu en rotation au deuxième rail (4) et ayant un cliquet de verrouillage (25a),
l'élément de verrouillage (25) permettant ou empêchant sélectivement le deuxième rail (4) de glisser par rapport au premier rail (3) lorsque le cliquet de verrouillage (25a) est respectivement engagé avec ou détaché d'un trou sélectionné parmi les trous de verrouillage (11a);
**caractérisé en ce que** la première partie de flexion (13) prend fin dans une partie (13a) d'extrémité distale qui s'étend globalement de manière verticale vers le bas vers la partie de base (12) dans la direction avant-arrière du véhicule sur la plage de verrouillage et la plage de déverrouillage, la partie (13a) d'extrémité distale ayant, sur la totalité d'une plage correspondant à la plage de verrouillage, une première longueur verticale (L1) qui est plus courte que sa deuxième longueur verticale (L2) sur une plage correspondant à la plage de déverrouillage.

2. Dispositif de siège de véhicule selon la revendication 1, dans lequel la plage de déverrouillage est établie au moins au niveau d'une partie arrière du premier rail (3).

3. Dispositif de siège de véhicule selon la revendication 1 ou 2, dans lequel la plage de déverrouillage est établie au niveau de la partie (11) de paroi latérale sur laquelle les trous de verrouillage (11a) ne sont pas formés.

4. Dispositif de siège de véhicule selon l'une des revendications précédentes, dans lequel, au niveau de la partie d'extrémité de la plage de déverrouillage où la partie (13) d'extrémité distale s'approche de la plage de verrouillage, la deuxième longueur verticale de la partie (13) d'extrémité distale est graduellement réduite dans la direction arrière.
